# EUROPÄISCHE PATENTSCHRIFT

(11) **EP 1 014 539 B1**
(45) Veröffentlichungstag und Bekanntmachung des Hinweises auf die Patenterteilung: **14.11.2007**
(21) Anmeldenummer: 99811075.3
(22) Anmeldetag: 23.11.1999
(51) Int. Cl.: H02K 11/00, G07C 3/00

(54) **System mit einem Linearmotor und einer Elektronikeinheit**
System with a linear motor and a control unit
Système comportant un moteur linéaire et une unité de commande

(30) Priorität: 21.12.1998 EP 98811246
(43) Veröffentlichungstag der Anmeldung: 28.06.2000
(73) Patentinhaber: NTI AG, 8005 Zürich (CH)
(72) Erfinder: Rohner, Ronald Dr., 8964 Rudolfstetten (CH); Hitz, Marco Dr., 3186 Düdingen (CH); Ritter, Luca, 6648 Minusio (CH)
(74) Vertreter: Heinen, Detlef

(56) Entgegenhaltungen:
- EP-A- 0 088 591
- EP-A- 0 332 607
- EP-A- 0 874 297
- WO-A-94/27516
- DE-C- 3 410 675
- US-A- 5 726 911
- PATENT ABSTRACTS OF JAPAN vol. 95, no. 6, 31. Juli 1995 (1995-07-31) & JP 07 075364 A (MATSUSHITA ELECTRIC IND CO), 17. März 1995 (1995-03-17)

## Beschreibung

Die Erfindung betrifft ein System gemäss dem Oberbegriff des unabhängigen Patentanspruchs.

Linearmotoren umfassen einen Stator und einen in Richtung der Längsachse des Stators verschiebbaren Läufer. Dabei kann der Läufer grundsätzlich als Innenläufer oder als Aussenläufer ausgebildet sein. Ein bekanntes System von Linearmotoren umfasst eine oder mehrere Elektronikeinheiten und mit diesen verbindbare Linearmotoren. Die Elektronikeinheiten stellen einerseits eine Verbindung zu einer übergeordneten Steuerung dar und sind andererseits für die Steuerung bzw. Regelung der mit ihnen verbundenen Linearmotoren zuständig.

Um die Steuerung bzw. Regelung des Linearmotors übernehmen zu können, muss die Elektronikeinheit ständig über die aktuelle Position des Läufers eine Information erhalten. Zu diesem Zweck sind bei einem typischen Ausführungsbeispiel eines Linearmotors im Stator beispielsweise zwei Hall-Sensoren zueinander versetzt angeordnet, und zwar derart, dass sie aufgrund ihrer versetzten Anordnung das von den Magneten des Läufers erzeugte Magnetfeld in ein elektrisches Sinus- bzw. Cosinus-Ausgangssignal wandeln. Des weiteren ist bei diesem Ausführungsbeispiel im Stator noch eine Verstärkerschaltung vorgesehen, welche die elektrischen Ausgangssignale der Hall-Sensoren verstärkt, sodass es möglich ist, die vergleichsweise schwachen Ausgangssignale der Hall-Sensoren auch über ein längeres Verbindungskabel zur Elektronikeinheit zu übertragen. Im übrigen sind in diesem Ausführungsbeispiel im Linearmotor lediglich noch passive Komponenten, wie beispielsweise Temperatursensoren und natürlich die Spulen des Linearmotors, angeordnet.

Es ist unmittelbar einleuchtend, dass die Linearmotoren und die Elektronikeinheiten beliebig untereinander austauschbar sein müssen, also ein Linearmotor gleichen Typs muss mit jeder Elektronikeinheit, die für seinen Betrieb vorgesehen ist, einwandfrei funktionieren können. Dies muss schon deshalb so sein, weil im Falle eines Defekts eines Linearmotors oder einer Elektronkeinheit die jeweils nicht defekte andere Komponente unverändert eingesetzt werden kann.

Dies bedeutet, dass die Linearmotoren und deren einzelne Komponenten mit möglichst geringen Fertigungstoleranzen - also mit einer hohen Genauigkeit bei der Reproduktion - hergestellt werden müssen. Dann können nämlich die Steuerungs- und Regelungsparameter in der Elektronikeinheit unverändert bleiben und müssen nicht neu festgelegt werden. Fertigungstoleranzen sind indessen bei der Herstellung in der Praxis in einem bestimmten Ausmass immer vorhanden und können nicht vollständig vermieden werden. Dies soll nachfolgend erläutert werden.

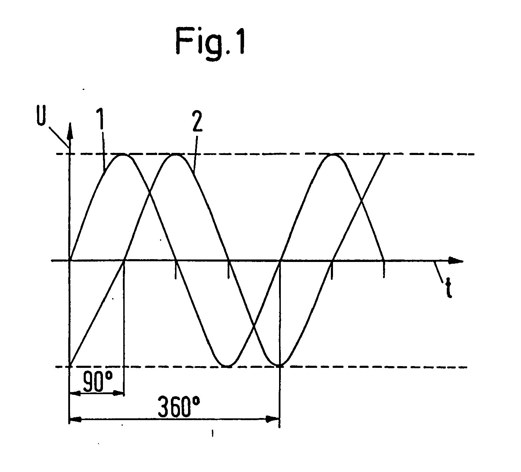

In Fig. 1 ist zunächst der ideale Zustand dargestellt. Man erkennt dort die Ausgangssignale 1 und 2 - die Ausgangsspannungen U - zweier Hall-Sensoren, die so zueinander versetzt angeordnet sind, sowie das von den Magneten des Läufers erzeugte sinus- bzw. cosinusförmige Ausgangssignal, aufgetragen über der Zeit t.

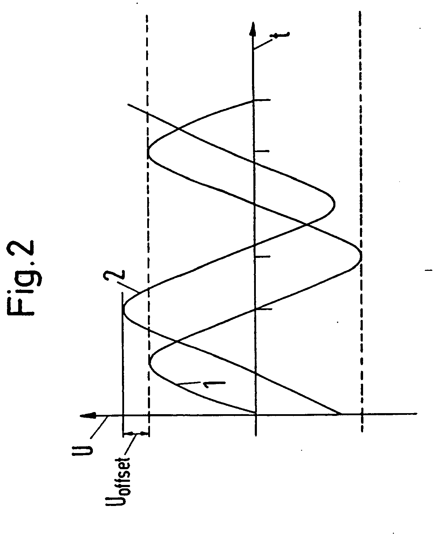

Hall-Sensoren können eine gewisse Offset-Spannung U_{offset} aufweisen, welche als Gleichspannungsanteil am Ausgang des Hall-Sensors dem von den Magneten des Läufers erzeugten Sinus- bzw. Cosinussignal überlagert ist. Dies ist in Fig. 2 zu erkennen, wo das Signal 2 gegenüber dem Signal 1 (ideales Signal ohne Offset-Spannung) um die Offset-Spannung U_{offset} in Richtung der Ordinate verschoben ist.

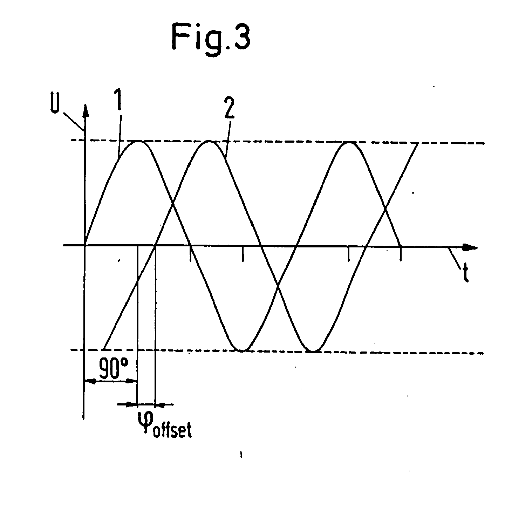

Weiterhin können Hall-Sensoren auch einen Phasenverschiebungs-Offset ϕ_{offset} aufweisen, wie dies in Fig. 3 angedeutet ist. Dort ist das Signal 2 gegenüber dem Signal 1 um den Phasenverschiebungsoffset ϕ_{offset} in Richtung der Abszisse verschoben.

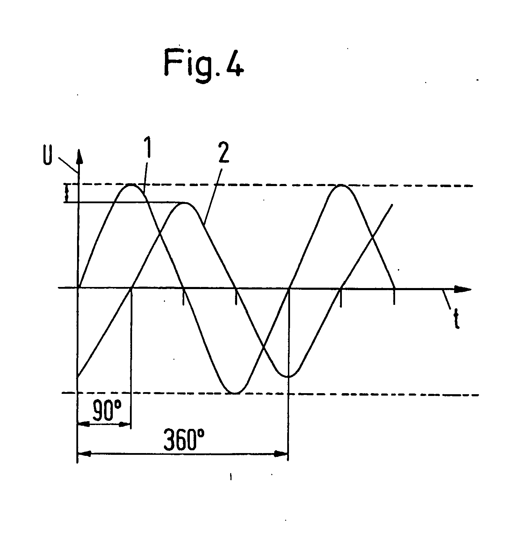

Weiterhin können Hall-Sensoren auch einen unterschiedlichen Verstärkungsfaktor aufweisen. Bei gleicher Erregung durch die Magneten vom Läufer weist also ein Hall-Sensor ein Ausgangssignal - eine Ausgangsspannung U - auf, welche von der Amplitude her kleiner ist als die Amplitude des Ausgangssignals des anderen Hall-Sensors. In Fig. 4 erkennt man ein solches Beispiel von zwei Hall-Sensoren mit unterschiedlichem Verstärkungsfaktor: Die Amplitude des Signals 1 des einen Hall-Sensors ist grösser als die Amplitude des Signals 2 des anderen Hall-Sensors.

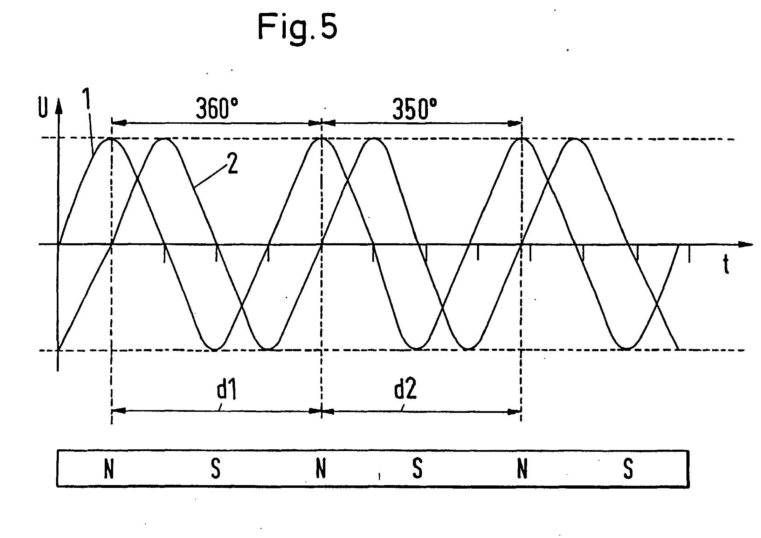

Eine weitere Ungenauigkeit kann von den Magneten des Läufers herrühren. Man erkennt in Fig. 5, dass die Abstände d1 und d2, die jeweils den räumlichen Abstand von zwei gleichnamigen magnetischen Polen (hier: von zwei Nordpolen) bezeichnen, geringfügig variieren können, die Magnete sind - in Richtung der Bewegung des Läufers betrachtet - unterschiedlich lang. Bei dem in Fig. 5 gezeigten Beispiel ist die maximale Amplitude des Ausgangssignals der Hall-Sensoren bei gleichmässiger Geschwindigkeit des Läufers bereits nach einer Zeit t erreicht, welche einem Phasenwinkel von 350° entspricht, der Abstand d2 ist also kleiner als der Abstand d1. Wären die gleichnamigen magnetischen Pole (hier die Nordpole) stets gleich beabstandet, würde die maximale Amplitude erst wieder bei einer Zeit t auftreten, die einem Phasenwinkel von 360° entspricht.

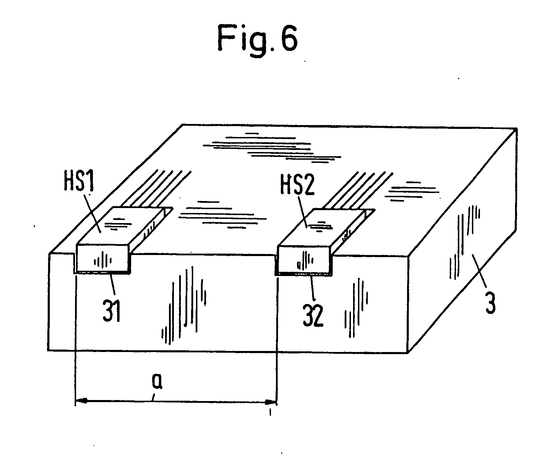

Es können aber auch Ungenauigkeiten von der mechanischen Anordnung der Hall-Sensoren herrühren. Die Hall-Sensoren HS1 und HS2 sind (siehe Fig. 6) in einer Halterung 3 in Vertiefung 31 und 32 idealerweise in einem Abstand a voneinander angeordnet, der bei gleichbleibendem Abstand der Magnete des Läufers einem Phasenwinkel von 90° entspricht. Demzufolge wird beim Vorbeilaufen der Magnete des Läufers von dem einen Hall-Sensor HS1 ein sinusförmiges Ausgangssignal erzeugt, während von dem Hall-Sensor HS2 ein cosinusförmiges Ausgangssignal erzeugt wird. Dies entspricht dem idealen Fall (siehe auch Fig. 1). Entspricht der Abstand a nicht genau einem Phasenwinkel von 90°, so kann es zu einem bereits anhand von Fig. 3 erläuterten Phasenverschiebungsoffset kommen.

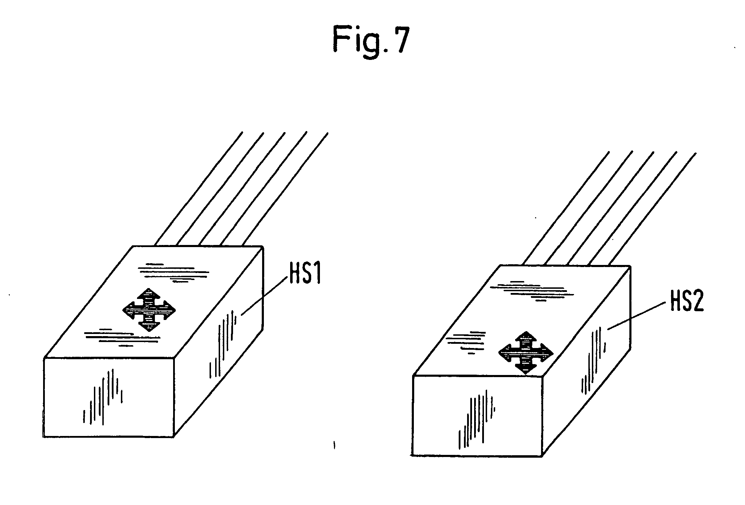

Eine weitere Ursache für einen Phasenverschiebungsoffset kann aber auch daher rühren, dass die eigentlichen Hall-Sensoren HS1 und HS2 innerhalb des Sensorgehäuses nicht genau mittig angeordnet sind. In Fig. 7 ist ein solcher Fall gezeichnet, wobei die Pfeilkreuze jeweils die Richtung und das Mass der Verschiebung anzeigen. Der rechte Sensor HS2 ist also innerhalb der Vertiefung 32 (in Fig. 7 nicht dargestellt, siehe Fig. 6) nach rechts und nach vorne versetzt angeordnet.

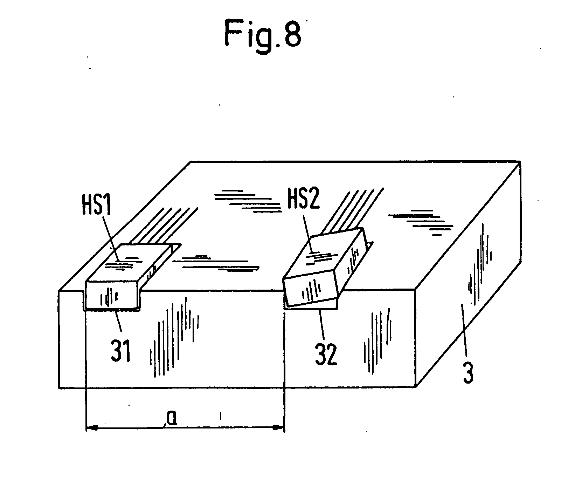

Wie bereits angesprochen können die Hall-Sensoren HS1 und HS2 unterschiedliche Verstärkungsfaktoren aufweisen. Während die Begründung hierfür komponentenimmanent sein kann - d.h. die Hall-Sensoren HS1 und HS2 weisen für sich genommen bei optimaler Anordnung innerhalb der Vertiefungen 31 und 32 einen unterschiedlichen Verstärkungsfaktor auf) - kann der unterschiedliche Verstärkungsfaktor auch durch eine schräge Einbaulage - in Fig. 8 z.B. des Hall-Sensors HS2 innerhalb der Vertiefung 32 - begründet sein.

Insgesamt lässt sich also feststellen, dass Qualitätsunterschiede - wenn auch oft nur von geringem Ausmass - immer vorhanden sind und daher bei der Auslegung der Regelung und den garantierbaren Leistungsmerkmalen der Linearmotoren Abstriche gemacht werden müssen bzw. Kompromisse eingegangen werden müssen.

Weiterhin nachteilig ist es bei bekannten Linearmotoren, dass diese regelmässig mit Klebeetiketten beschriftet werden, aus denen hervorgeht, um welchen Typ von Linearmotor bzw. um welche Variante innerhalb eines Typs von Linearmotor es sich handelt. Wird die Beschriftung der Klebeetiketten unleserlich, so können oftmals bestimmte Parameter des Linearmotor entweder nur noch schwer, oder gar nicht mehr ermittelt werden. Grundsätzlich verloren ist in einem solchen Fall die Seriennummer, weil für jeden Motor eine separate Seriennummer vergeben wird. Gerade im Falle eins notwendigen Rückrufs von Linearmotoren wirkt sich dies nachteilig aus, weil unter Umständen die betroffenen Linearmotoren nicht mehr identifiziert werden können.

Zwar ist es grundsätzlich vorstellbar, in einem solchen Fall die Seriennummer in das Gehäuse einzuprägen (ähnlich der Fahrgestellnummer bei Automobilen), dies ist jedoch von der kommerziellen Seite her (Aufwand) nicht praktikabel.

Was die jeweilige Variante des Linearmotors innerhalb eines Typs von Linearmotoren betrifft, so weisen die verschiedenen Varianten oftmals von ihrem Äusseren her ein absolut identisches Aussehen auf, haben aber grundsätzlich ein anderes elektrisches "Innenleben". Wenn der Anwender dann die falsche Variante in der Elektronikeinheit anwählt, kann dies zu Fehlfunktionen führen. Bisherige Lösungsansätze dieses Problems gehen dahin, dass versucht wird, aufgrund der von der Elektronikeinheit messbaren Signale den Motortyp und die Motorvariante eindeutig zu identifizieren. Dies ist aber aus technischen Gründen nicht immer möglich.

In der JP-A-07075364 ist ein Motor-aber kein Linearmotor - gezeigt, der mit einem Speicher versehen ist , in welchem Informationen über den Motor gespeichert sind.

In der EP-A- 0 874 297 ist eine CNC-Maschine gezeigt, bei der die Geschwindigkeits -/Positionsdetektoren der Motoren Speicher umfassen, in denen Informationen zur Spezifikation der einzelnen Motoren gespeichert sind.

Aufgabe der Erfindung ist es, einen Linearmotor vorzuschlagen, der die zahlreichen vorstehend genannten Nachteile nicht aufweist. Dabei soll der fertigungstechnische Aufwand bei der Überwindung dieser Nachteile so gering wie möglich sein.

Diese Aufgabe wird durch ein System gelöst, wie es durch die Merkmale des unabhängigen Patentanspruchs charakterisiert ist. Besonders vorteilhafte Ausführungsbeispiele ergeben sich aus den abhängigen Patentansprüchen.

Im folgenden wird die Erfindung anhand der Zeichnung näher erläutert. Es zeigen:
- Fig. 1: den Verlauf der Ausgangssignale zweier Hall-Sensoren im Idealfall
- Fig. 2: den Verlauf der Ausgangssignale zweier Hall-Sensoren, wobei einem Ausgangssignal eine Offset-Spannung überlagert ist,
- Fig. 3: den Verlauf der Ausgangssignale zweier Hall-Sensoren, wobei ein Ausgangssignal einen Phasenverschiebungs-Offset aufweist,
- Fig. 4: den Verlauf der Ausgangssignale zweier Hall-Sensoren, die einen unterschiedlichen Verstärkungsfaktor aufweisen,
- Fig. 5: den Verlauf des Ausgangssignale zweier Hall-Sensoren, wobei zwei aufeinanderfolgende gleichnamige Pole des Läufers einen unterschiedlichen Abstand voneinander haben,
- Fig. 6: eine Halterung, in deren Vertiefungen die Hall-Sensoren optimal angeordnet sind,
- Fig. 7: ein Ausführungsbeispiel, bei welchem einer der Hall-Sensoren versetzt im Sensorgehäuse angeordnet ist,
- Fig. 8: eine Halterung, in deren einer Vertiefung einer der Hall-Sensoren in einer schrägen Einbaulage angeordnet ist
und
- Fig. 9: ein Ausführungsbeispiel eines erfindungsgemässen Linearmotors mit einer Speichereinheit, in welcher für den jeweiligen Linearmotor charakteristische Daten gespeichert sind.

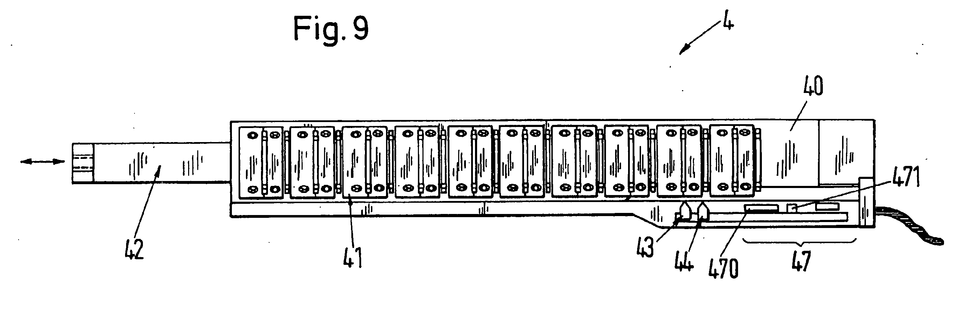

In dem in Fig. 9 gezeigten Ausführungsbeispiel eines erfindungsgemässen Linearmotors 4 erkennt man den Stator 40, in welchem mehrere Spulen 41 angeordnet sind. Ferner erkennt man einen Läufer 42, der mehrere Magnete umfasst (hier nicht dargestellt). Im Stator 40 sind weiterhin zwei Hall-Sensoren 43 und 44 angeordnet, welche jeweils Auskunft über die aktuelle Position des Linearmotors geben. Diese sind im Idealfall (siehe weiter oben) so angeordnet, dass sie ein um 90° versetztes Ausgangssignal erzeugen, wenn der Läufer 42 in Richtung der Längsachse des Stators 40 bewegt wird.

Die Spulen 41 Im Stator 40 bewirken im Zusammenwirken mit den Magneten des Läufers 42 eine Verschiebung des Läufers 42 bewirken bzw. halten den Läufer 42 in einer gewünschten Position fest.

Schliesslich erkennt man im Stator 40 noch eine Mikroelektronik 47, welche eine Speichereinheit 470 und einen Prozessor 471 zum Auslesen der Speichereinheit 470 umfasst. Diese Daten können mit Hilfe eines Kabels K zu einer Elektronikeinheit (nicht dargestellt) übertragen werden, welche einerseits die Verbindung zu übergeordneten Steuereinheiten darstellen kann und andererseits für die Steuerung bzw. Regelung des jeweils mit ihr verbundenen Linearmotors 4 besorgt ist.

In dieser Speichereinheit 470 können nun unterschiedliche Daten gespeichert sein, die für den jeweiligen Linearmotor 4 charakteristisch sind. Diese Daten können beim Verbinden des Linearmotors 4 von der Elektronikeinheit (nicht dargestellt) mit Hilfe des Prozessors 471 ausgelesen werden.

Wenn z.B. die charakteristischen Daten Angaben über eine vorhandene Offset-Spannung, und/oder einen vorhandenen Phasenverschiebungs-Offset, und/oder über unterschiedliche Verstärkungsfaktoren der Hall-Sensoren, und/oder Angaben über einen nicht gleichmässigen Abstand benachbarter gleichnamiger Magnetpole des Läufers enthalten, so ist es möglich, die dadurch auftretenden Abweichungen der Ausgangssignale zu berücksichtigen bzw. zu korrigieren. Dazu müssen diese Daten aber der Elektronikeinheit bekannt sein, welche diese Daten beispielsweise in einer Initialisierungsphase beim Verbinden des Linearmotors 4 mit der Elektronikeinheit mit Hilfe des Prozessors 471 aus der Speichereinheit 470 ausliest. Verfügt die Elektronikeinheit einmal über die entsprechenden Daten, kann sie diese Daten auch bei der Steuerung bzw. Regelung des Linearmotors 4 exakt berücksichtigen. Somit können Abweichungen vom Idealfall - was auch immer die Ursache hierfür sein mag (komponentenimmanente Toleranzen, Toleranzen beim Zusammenbau, etc.), die ansonsten zwangsläufig in einer gewissen Ungenauigkeit bei der Steuerung bzw. Regelung des Linearmotors resultieren, berücksichtigt und ggf. korrigiert werden.

Weiterhin ist es natürlich möglich, die Seriennummer wie auch den Typ des Linearmotors und die spezielle Variante des Linearmotors innerhalb des gleichen Typs als Information in der Speichereinheit 470 abzulegen, sodass diese Daten in der Initialisierungsphase ebenfalls aus der Speichereinheit 470 ausgelesen werden können. Auch das Herstellungsdatum kann auf diese Weise gespeichert und abrufbar sein.

Des weiteren kann der zulässige Temperaturbereich, in welchem der Linearmotor 4 betrieben werden darf, in der Speichereinheit 470 abgelegt und aus dieser abrufbar sein.

Ferner ist es möglich, auf diese Weise eine Herstellerkennung (sogenanntes "Brandlabeling") in der Speichereinheit 470 abzulegen. Es ist nämlich heutzutage bisweile so, dass dasselbe Produkt unter verschiedenen Markennamen und/oder über verschiedene Vertriebskanäle verkauft wird. Das Interesse des Anbieters ist es in einigen Fällen, dass Produkte zwar möglichst gleich in der Herstellung sind, jedoch anschliessend so gekennzeichnet werden, dass sie vom Kunden nicht gegeneinander ausgetauscht werden können. Dieses Interesse kann z.B. deshalb gegeben sein, weil ein Anbieter für seinen Linearmotor gleich eine gewisse Servicegarantie mitverkauft, während ein Konkurrent den gleichen Linearmotor etwas günstiger anbietet, dafür aber keinerleit Service bietet. Nun könnnte der Kunde zwar den günstigeren Linearmotor erwerben, aber dann von dem anderen Hersteller den Service in Anspruch nehmen, weil die Linearmotoren ja nicht voneinander unterscheidbar wären. Derartige Probleme können einfach behoben werden, wenn in der Speichereinheit 470 eine entsprechende Kennung abgelegt ist und diese bei der Inbetriebnahme bzw. in der Initalisierungsphase mit Hilfe des Prozessors 471 von der Elektronikeinheit ausgelesen wird.

Weiterhin ist es auch möglich, dass die Elektronikeinheit während des Betriebs mit Hilfe des Prozessors 471 bestimmte Daten in die Speichereinheit 470 hineinschreibt oder der Prozessor 471 dies während des Betriebs automatisch macht. Zum Beispiel könnte die Betriebsdauer, die Anzahl der erfolgten Bewegungen des Läufers 42 oder eine Information darüber, ob der Kunde den Linearmotor 4 jemals überlastet hat (Aufzeichnung der aktuellen Betriebstemperatur und insbesondere von Übertemperaturen), in die Speichereinheit 470 hineingeschrieben werden. Dies kann nützlich sein im Hinblick auf zu erbringende Garantieleistungen bzw. Serviceleistungen.

Es ist auch möglich, dass in der Speichereinheit 470 ein Testprogramm abgespeichert ist, welches den Linearmotor 4 von Zeit zu Zeit prüft und gegebenenfalls Fehlermeldungen bzw. Servicemeldungen erzeugt.

Die Speichereinheit 470 kann beispielsweise als EEPROM-Speicherbaustein (Electrically Erasable Programmable Read Only Memory) ausgeführt sein. Im Linearmotor 4 ist dann keine Batterie notwendig, weil die Funktion des Prozessors 471 zum Auslesen der Speichereinheit 470 ja erst dann notwendig ist, wenn der Linearmotor 4 mit der Elektronikeinheit verbunden wird (Inbetriebnahmen, Initialisierungsphase). Die notwendige elektrische Versorgung des Prozessors 471 erfolgt dann durch die Elektronikeinheit. Die in dem EEPROM-Speicherbaustein gespeicherten Daten bleiben auch dann erhalten, wenn der Linearmotor von der Elektronikeinheit getrennt ist.

## Patentansprüche

1. System mit mindestens einen Linearmotor (4) sowie mit mindestens einer separaten Elektronikeinheit zur Steuerung bzw. Regelung des jeweiligen mit der Elektronikeinheit verbundenen Linearmotors (4) bzw. der mit der jeweiligen Elektronikeinheit, verbundenen Linearmotor, wobei der mindestens eine Linearmotor (4) einen Stator (40) und einen in Richtung der Längsachse des Stators (40) verschiebbaren Läufer (42) aufweist, **dadurch gekennzeichnet, dass** der Linearmotor (4) mindestens eine Speichereinheit (470) umfasst, in welcher für den jeweiligen Linearmotor (4) charakteristische Daten gespeichert sind, wobei die in der Speichereinheit (470) gespeicherten Daten Fertigungstoleranzen von einer oder mehreren Komponenten des jeweiligen Linearmotors (4) umfassen, und dass der Linearmotor ferner Mittel (471) zum Auslesen der in der Speichereinheit (470) gespeicherten Daten umfasst, wobei mit Hilfe der Mittel (471) zum Auslesen der Daten die in der Speichereinheit (470) gespeicherten Daten beim Verbinden des Linearmotors mit einer separaten zur Steuerung bzw. Regelung des Linearmotors vorgesehenen Elektronikeinheit aus der Speichereinheit (470) ausgelesen und an die Elektronikeinheit zur Berücksichtigung dieser Daten bei der Steuerung bzw. Regelung des Linearmotors durch die Elektronikeinheit übertragen werden.

2. System nach Anspruch 1, **dadurch gekennzeichnet, dass** die Speichereinheit (470) im Stator (40) des Linearmotors (4) angeordnet ist.

3. System nach einem der vorangehenden Ansprüche, **dadurch gekennzeichnet, dass** die in der Speichereinheit (470) gespeicherten Daten den Typ des Linearmotors (4) umfassen.

4. System nach einem der vorangehenden Ansprüche, **dadurch gekennzeichnet, dass** die in der Speichereinheit (470) gespeicherten Daten die Seriennummer des Linearmotors (4) umfassen.

5. System nach einem der vorangehenden Ansprüche, **dadurch gekennzeichnet, dass** die in der Speichereinheit (470) gespeicherten Daten Toleranzen umfassen, die beim Zusammenbau von Komponenten des Linearmotors (4) entstehen.

6. System nach einem der vorangehenden Ansprüche, **dadurch gekennzeichnet, dass** die in der Speichereinheit (470) gespeicherten Daten eine Herstellerkennung oder Händlerkennung umfassen.

7. System nach einem der vorangehenden Ansprüche, **dadurch gekennzeichnet, dass** in der Speichereinheit (470) ein auf den jeweiligen Linearmotor (4) bezogenes Testprogramm abgespeichert ist, welches den jeweiligen Linearmotor (4) prüft und ggf. eine entsprechende Fehlermeldung erzeugt.

8. System nach einem der vorangehenden Ansprüche, **dadurch gekennzeichnet, dass** Schreibmittel (471) vorgesehen sind, welche während des Betriebs des Linearmotors (4) Betriebsdaten, z.B. die jeweils aktuelle Betriebstemperatur, in die Speichereinheit (470) hineinschreiben.

## Claims

1. System comprising at least one linear motor (4) and at least one separate electronic unit for controlling or regulating the respective linear motor (4) connected to the electronic unit, or the linear motors connected to the respective electronic unit, wherein the at least one linear motor (4) has a stator (40) and a runner (42), which can be displaced in the direction of the longitudinal axis of the stator (40), **characterised in that** the linear motor (4) comprises at least one memory unit (470), in which characteristic data for the respective linear motor (4) are stored, wherein the data which are stored in the memory unit (470) comprise manufacturing tolerances of one or more components of the respective linear motor (4), and **in that** the linear motor (4) further comprises means (471) to read out the data stored in the memory unit (470), wherein upon connection of the linear motor with a separate electronic unit for controlling or regulating the linear motor, the data stored in the memory unit (470) is read out of the memory unit with the aid of the means (471) to read out the data, and is transmitted to the electronic unit for consideration in controlling or regulating the linear motor through the electronic unit.

2. System according to claim 1, **characterised in that** the memory unit (470) is arranged in the stator (40) of the linear motor (4).

3. System according to any one of the preceding claims, **characterised in that** the data which are stored in the memory unit (470) comprise the type of the linear motor (4).

4. System according to any one of the preceding claims, **characterised in that** the data which are stored in the memory unit (470) comprise the serial number of the serial motor (4).

5. System according to any one of the preceding claims, **characterised in that** the data which are stored in the memory unit (470) comprise tolerances which arise during the assembly of components of the linear motor (4).

6. System according to any one of the preceding claims, **characterised in that** the data which are stored in the memory unit (470) comprise a manufacturer code or a marketer code.

7. System according to any one of the preceding claims, **characterised in that** a test program which is related to the respective linear motor (4) is stored in the memory unit (470) which tests the respective linear motor (4) and where appropriate produces a corresponding error report.

8. System according to any one of the preceding claims, **characterised in that** writing means (471) are provided which write operating data, e.g. the respective current operating temperature, into the memory unit (470) during the operation of the linear motor (4).

## Revendications

1. Système avec au moins un moteur linéaire (4), ainsi qu'avec au moins une unité électronique séparée, pour la commande ou pour la régulation du moteur linéaire (4) concerné relié à l'unité électronique ou des moteurs linéaires reliés à l'unité électronique concernée, le au moins un moteur linéaire (4) comportant un stator (40) et un induit (42), déplaçable en direction de l'axe longitudinal du stator (40), **caractérisé en ce que** le moteur linéaire (4) comprend an moins une unité de mémoire (470) dans laquelle sont mémorisées des données caractéristiques pour le moteur linéaire (4) concerné, les données mémorisées dans l'unité de mémoire (470) comprenant des tolérances de fabrication de l'un ou de plusieurs composants du moteur linéaire (40) concerné et **en ce que** le moteur linéaire comprend par ailleurs des moyens (471) pour la lecture des données mémorisées dans l'unité de mémoire (470), lors de la liaison du moteur linéaire avec une unité électronique séparée prévue pour la commande ou la régulation du moteur linéaire, les données mémorisées dans l'unité de mémoire (470) étant lues dans l'unité de mémoire (470) à l'aide des moyens (471) de lecture des données, et transmises à l'unité électronique, pour la prise en considération desdites données lors de la commande ou de la régulation du moteur linéaire par l'unité électronique.

2. Système selon la revendication 1, **caractérisé en ce que** l'unité de mémoire (470) est disposée dans le stator (40) du moteur linéaire (4).

3. Système selon l'une quelconque des revendications précédentes, **caractérisé en ce que** les données mémorisées dans l'unité de mémoire (470) comprennent le type du moteur linéaire (4).

4. Système selon l'une quelconque des revendications précédentes, **caractérisé en ce que** les données mémorisées dans l'unité de mémoire (470) comprennent le numéro de série du moteur linéaire (4).

5. Système selon l'une quelconque des revendications précédentes, **caractérisé en ce que** les données mémorisées dans l'unité de mémoire (470) comprennent des tolérances, qui naissent de l'assemblage de composants du moteur linéaire (4).

6. Système selon l'une quelconque des revendications précédentes, **caractérisé en ce que** les données mémorisées dans l'unité de mémoire (470) comprennent une identification du fabricant ou une identification du détaillant.

7. Système selon l'une quelconque des revendications précédentes, **caractérisé en ce que** dans l'unité de mémoire (470) est mémorisé un programme d'essai se rapportant au moteur linéaire (4) concerné, qui vérifie le moteur linéaire (4) concerné et qui le cas échéant délivre un message d'erreur correspondant.

8. Système selon l'une quelconque des revendications précédentes, **caractérisé en ce que** sont prévus des moyens d'écriture (471), qui pendant le fonctionnement du moteur linéaire (4) écrivent dans l'unité de mémoire (470) des données d'exploitation, par exemple la température de fonctionnement respectivement actuelle.
